# EUROPEAN PATENT SPECIFICATION

(11) **EP 1 726 215 B1**
(45) Date of publication and mention of the grant of the patent: **21.05.2008**
(21) Application number: 05290990.0
(22) Date of filing: 09.05.2005
(51) Int. Cl.: A23L 1/0524, A23L 2/02, A23L 2/66, A23J 3/16, A23C 9/13, A23C 9/137

(54) **Method for the manufacturing of soy and milk protein-based preparations having a high total protein content**
Verfahren zur Herstellung eines auf Soja und Milchprotein basierenden Produktes mit hohem Gesamtproteingehalt
Procédé de production d'un produit à base de protéines de lait et de soja à teneur elevée en protéines totales

(43) Date of publication of application: 29.11.2006
(73) Proprietor: Compagnie Gervais Danone, 75009 Paris (FR)
(72) Inventor: Geiger, Rupert, 96264 Altenkunstadt (DE)
(74) Representative: Ahner, Francis

(56) References cited:
- EP-A- 1 338 210
- EP-A- 1 488 708
- WO-A-20/05046361
- WO-A-20/05063056
- PATENT ABSTRACTS OF JAPAN vol. 2003, no. 12, 5 December 2003 (2003-12-05) & JP 2004 222527 A (OKAWA SHOKUHIN KOGYO KK), 12 August 2004 (2004-08-12)
- CIRCLE S J: "Soy proteins in dairy-type foods, beverages, confections, dietary, and other foods" JOURNAL OF THE AMERICAN OIL CHEMISTS' SOCIETY, AMERICAN OIL CHEMISTS' SOCIETY, CHAMPAIGN, IL, US, vol. 51, no. 1, 1974, pages 198A-199A, XP002233834 ISSN: 0003-021X

## Description

The present invention relates to a method for the manufacturing of soy and milk protein-based preparations having a high total protein content. The invention also relates to soy and milk protein-based preparations having a high total protein content that are obtainable by said method, as well as to the use of said preparations in acidic food products, including acidic drinks.

Stabilizing one's weight all along the year generally implies periods during which more attention is paid to food and sport. Unfortunately, paying attention to food typically means reducing more or less calorie intake.

Without a specialist's advice, for reducing calorie intake, a typical way consists of homogeneously reducing macro-nutrient intake relative to a standard diet: not only lipids and carbohydrates, but also proteins (often associated to fatty products such as meat and cheese) are less eaten. Without any compensation in protein intake, the organism tends to draw on the reserves constituted by the muscles, thereby weakening body integrity and health.

However, protein intake maintained at a standard level, associated to a steady sport practice, have proved to be good for a satisfying "body composition" (ratio of fat to non-fat masses) and, thus, for a better and easier weight watching. In particular, a standard protein intake positively affects the body figure (muscles are preserved) and basal metabolism of the organism, which essentially consists of the energy required by the muscles at rest.

For instance, without caution, for a calorie intake of 15% less, protein intake may be reduced to an extent of between about 10 to 12 g per day (based on a diet of between about 1800 and 2200 kcal/day).

Besides, in the last two decades, a lot of studies have proved the health benefits of soy proteins, for example by reducing menopause symptoms, by reducing cholesterol level, by decreasing cancer prevalence, etc.

Moreover, soy-based products or partially soy-based products are a good alternative for persons who are allergic to cow's milk.

The consumers can find many marketed products containing soy ingredients but these products are mostly made of 100% vegetables, i.e., these products contain "soy-milk" made from crushed soybeans mixed with water.

Different companies have tried to develop acidic products containing soy proteins, such as dairy products.

Milk-containing acidic beverages or acidic dairy products have been creating a large market in the recent soft drink industry for their refreshing taste and flavor, supported by natural- and health-conscious consumers. Due to the diversified preference of consumers, the market is demanding a wide variety of milk-containing acidic beverages such as those of low-calorie and those containing components that contribute to maintenance of one's heath such as fruit juice or vegetable juice.

One of the most important difficulty when producing acidic dairy products of low-calorie type is that suspended milk protein particles aggregate and precipitate.

Moreover, milk- and/or soy-containing acidic beverages that also contain fruit and/or vegetable juice usually include various components capable of reacting with milk proteins, such as polyphenols, thereby adversely affecting stability of suspended milk protein particles.

Yet unpublished European Patent Application No. EP 04291247.7 filed on May 14, 2004, discloses a method for manufacturing a soy protein-based preparation, comprising :
1) hydration of soy proteins and of at least one thickener agent is carried out in two different recipients:
   a) an aqueous composition containing soy proteins is heated at a temperature comprised between 50 and 90°C during a period comprised between 2 to 60 minutes,
   b) an aqueous composition containing at least one thickener agent is heated at a temperature comprised between 55 and 90°C during a period comprised between 2 to 60 minutes,
2) the aqueous compositions obtained in steps 1a) and 1b) are mixed for homogenization of the preparation,
3) the homogenized preparation obtained in step 2) is acidified to a pH comprised between 3 and 5.5, and
4) optionally, the preparation obtained in step 3) is heat-treated for long shelf life.

This method is efficient for preventing soy proteins from precipitating when exposed to an acidic environment. Nevertheless, this method is not adapted for producing preparations highly enriched in proteins, the expected total protein content of which largely exceeding, at least in Europe, the average protein content in final food products such as milk-based drinks or drinkable yoghurts or vegetable and/or fruit juice-based drinks.

Document EP 1 338 210 discloses a composition useful for stabilizing a suspension containing proteins, especially soy proteins, in an aqueous acidic liquid. This stabilizing composition is comprised of a high methoxyl pectin (HMP) and a propylene glycol alginate, in appropriate ratios. Document EP 1 338 210 also discloses a method for stabilizing proteins, especially soy proteins, in aqueous acidic liquids, wherein said method comprises:
1) hydrating a protein material in an aqueous solution,
2) hydrating the stabilizing composition in an aqueous solution, this aqueous solution being either the same as the one used in step 1) or a separate and distinct one,
3) mixing the resulting hydrated solution(s) under given conditions of time and temperature, and optionally adding other agents such as flavouring agents, colouring agents, defoamers, nutrients, and sweeteners,
4) acidifying the resulting mix to a pH of from 3.0 to 5.5 to form an aqueous acidic protein suspension,
5) vigorously mixing to homogenize this suspension, and
6) if desired, heat-treating the homogenized suspension, e.g., via pasteurisation.

From EP 1 250 845 is disclosed a method that facilitates production of a milk-containing acidic beverage, a low-calorie milk-containing acidic beverage, and a milk-containing acidic beverage containing fruit and/or vegetable juice. Aggregation and sedimentation of suspended milk protein particles are inhibited by the method which includes the steps of:
1) providing a starting material including at least milk, soybean dietary fibers, pectin, and an acidifier, preparing a mixture containing the milk and the soybean dietary fibers but not containing pectin, and adding the acidifier to the mixture to prepare a primary mixture having a pH of 3.0 to 4.2,
2) adding the pectin to the primary mixture to obtain a secondary mixture and
3) homogenizing the secondary mixture to obtain a milk-containing acidic beverage.

EP 1 488 708 discloses a process for making protein based acid beverages which are smooth and stable comprising any vegetable or animal protein.

JP 58013358 patent application discloses an acidic soybean soup beverage preparation and a method for preparing it. The method consists of the following steps:
1) about 15-100 mg% calculated as calcium ion of calcium salt (e.g., calcium lactate, calcium chloride), a saccharine (e.g., sucrose, inverted sugar) and a stabilizer (pectin, alginic acid propylene glycol ester) are added to an extracted solution of soybean protein (e.g., soybean milk prepared conventionally), and
2) the prepared solution is preferably heated at about 50-70°C so that the soybean protein is stabilized,
3) an acidic material (fruit juice and/or organic acid such as citric acid, etc.) is then added to the solution, to give an acidic soybean milk drink.

JP 60256372 patent application discloses an acidic protein drink preparation and a method to prepare it. The initial mixture contains the pectin and the soy protein together with other components.

Moreover, it is known a method for producing acidic protein food, wherein water-soluble soybean saccharines and pectin are added simultaneously (Japanese Patent No.2834345), a method for producing an acidic milk drink, wherein a dairy product is fermented with lactic acid bacteria in the presence of water-soluble hemicellulose derived from soybeans (JP 759512-A), and a method for producing a dairy product, wherein a dairy product is subjected to lactic fermentation in the presence of a stabilizing agent such as a high methoxyl pectin (JP 6327403-A).

Further, it has also been proposed a method for producing an acidic milk drink, including the steps of dissolving a stabilizing agent such as pectin and saccharides, mixing and dissolving a milk component therein, adjusting the pH to a predetermined acidity with an acidic substance, and adjusting the particle size distribution of 95% of suspended milk protein particles in the final product to fall within the range of 0.1 to 6 µm to have an average particle size from 0.5 to 1.2 µm (Japanese Patent No.2510435).

Also proposed is a method for preparing a protein-containing acidic beverage composition, wherein a mixture of a protein solution and sugar is added to an acid liquid under stirring (JP-7-16084-A).

These methods, however, take advantage of the protein-protective effect of sugar upon adjusting the pH with an acidifier, so that these methods cannot be applied to the preparation of a low-calorie product that is substantially free of sugars other than the sugar derived from milk.

It is known that addition of fruit or vegetable juice to milk-containing acidic beverages further promotes aggregation and sedimentation of the suspended particles, since milk protein is unstable under acidic conditions, and polyphenols and the like contained in fruit and vegetable juice tend to react with milk protein.

Similarly, it is known that soy proteins added to fruit or vegetable juice precipitate easily.

Hence, one of the main problems raised when manufacturing acidic products containing milk proteins and/or soy proteins (dairy products or fruit juices or mixes thereof...) is to avoid undesirable precipitation of the proteins while adding acid.

Also it is known that, higher the soy protein content in food products, less acceptable the organoleptic properties of these products, which are more and more astringent and less and less tasty.

Moreover, the Applicant has observed that, where only soy proteins are used for producing protein-enriched preparations, high soy protein contents generally result in non-acceptable texture from a consumer's point of view and in sandy preparations due to protein precipitation.

It is a goal of the present invention to provide a novel method for preparing organoleptically-acceptable protein-enriched preparations, this method preventing proteins from aggregating and precipitating under acidic conditions.

By "organoleptically acceptable", it is meant herein that the food products having a high protein content are not too astringent for an average consumer and that they have soft mouthfeel due to their low viscosity (easy to swallow and not too sticky) and a pleasant taste without heavy soy off tastes.

With a view to overcoming the problem of undesirable sandiness when high soy protein contents are used, the Applicant has interestingly found that it is possible to use soy proteins in combination with milk-derived proteins in protein-enriched preparations without similar trouble provided the method of the present invention, as described below, is used.

Thus, one aspect of the present invention is a method for the manufacturing of a protein-enriched preparation containing soy proteins and milk-derived proteins, comprising the following steps:
1) hydration of soy proteins and of at least one thickener agent is carried out in two different recipients:
   a) an aqueous composition containing soy proteins is heated at a temperature from about 50 to 90°C during a period from about 2 to 60 minutes,
   b) an aqueous composition containing at least one thickener agent is heated at a temperature from about 55 to 90°C during a period from about 2 to 60 minutes,
2) the aqueous compositions obtained in steps 1a) and 1b) are mixed,
3) milk-derived proteins are added to the mix obtained in step 2,
4) the preparation obtained in step 3 is homogenized,
5) the homogenized preparation is acidified to a pH from about 3 to 5.5,
6) optionally, the preparation obtained in step 5) is heat-treated for long shelf life, and
7) optionally but preferably, a fast cooling step down (e.g., to at least about 10°C) is performed in order to limit microbiological risks.

In the context of the present invention, it has surprisingly been found that separate hydration of the soy protein mixture on the one hand, and of the thickener agent mixture on the other hand, inhibits precipitation not only of the soy proteins but also of the milk-derived proteins that will be added later. Thus, further addition of thickener agent(s) is not necessary for protecting milk-derived proteins from precipitating, since the yet added thickener agent(s) is(are) sufficient for efficiently achieving such protection.

In addition, homogenizing the preparation before acidification increases protein protection against precipitation and thus prevents the preparations from being sandy. Actually, in most of the yet known processes, protein preparations are first acidified, and are then homogenized (see, for instance, EP 1 338 210 and EP 1 250 845 mentioned above). Nevertheless, interestingly, the Applicant has found that protein protection is enhanced when an homogenizing step is carried out prior to the acidifying step.

Advantageously, the method of the present invention allows production of protein-enriched preparations that are organoleptically acceptable.

Yet advantageously, the method according to the present invention allows production of protein-enriched preparations having a total protein content from about 10 to 20% in weight, preferably from about 15 to 18% in weight, and more preferably of about 16% in weight.

In a particular embodiment, the soy protein content in the protein-enriched preparations is from about 6 to 16%, preferably from about 7 to 10%, more preferably of about 8%, all % being expressed in weight of the preparation.

According to another particular embodiment, the weight ratio of soy proteins to thickener agent(s) is from about 9:1 to 15:1, preferably from about 10:1 to 13:1, and yet preferably of about 10:1.

Practically, the aqueous composition of step 1a) may be obtained by adding soy extract powder to water.

According to an embodiment of the invention, the thickener agent is selected from the group consisting of algae extract, alginic acid, alginate, agar-agar, carraghenan, carob bean meal, tamarin bean, guar meal, gum such as xanthan gum and carob gum, and pectin. Of course, other thickener agents may be used depending on the final acidic food product to obtain.

Preferably, the thickener agent is pectin or xanthan gum or carob gum or a combination thereof. More preferably, the thickener agent is pectin.

According to another embodiment of the present invention, the heating in steps 1a) and 1b) is carried out at a temperature from about 60 to 80°C, said temperature being preferably of about 75°C.

In the context of the present invention, the term "about" means that the considered value may vary to less or more than 10%.

According to yet another embodiment, the heating in step 1a) is carried out during a period from about 5 to 50 minutes, said period being preferably from about 10 to 30 minutes and being more preferably of about 15 minutes; and the heating in step 1b) is carried out during a period from about 3 to 40 minutes, preferably from about 5 to 20 minutes and more preferably from about 9 to 15 minutes.

In another embodiment, the mix in step 2) is maintained at a temperature from about 50 to 80°C, said temperature being preferably from about 60 to 70°C, and being more preferably of about 68°C.

Preferably, milk-derived proteins added in step 3) are selected for their solubility under acidic conditions and their heat-resistance. These proteins are especially selected from skimmed milk proteins, milk protein concentrates, whey proteins, and combinations thereof. In particular, to reach high total protein contents as described above, different milk-derived proteins are useful, alone or in combination. In particular, milk-derived proteins comprised of NZMP 8899 whey proteins (NZMP) associated to skimmed milk powder are very interesting from an organoleptic point of view. Alternatively to skimmed milk powder, less sticky and viscous preparations may be obtained using milk protein concentrates (e.g., Promilk 852 Al (Ingredia, Arras, France) and Alaplex 4850 (NZMP, Relligen, Germany)). Such milk protein concentrates allow to reduce lactose content (lactose increases stickiness) and dry matter (dry matter increases viscosity).

Practically, it is preferred to add the milk-derived proteins in step 3) in the form of powder.

In a particular embodiment, before homogenization in step 4), the preparation is powdered and hydrated during a period from about 2 to 60 minutes, preferably from about 5 to 50 minutes, more preferably of about 15 minutes. Hydration is advantageously carried out at a temperature from about 50 to 80°C, preferably from about 60 to 70°C, and more preferably from 60 to 65°C.

Homogenization in step 4) may be performed using an in line homogenizer or a conventional homogenizer. For instance, after hydration as mentioned above, the mixture is transferred to a tote by using an in line homogenizer as a pump. Such an equipment leads to a mechanical dispersion of solid particles, using a pressure of only 10 bars or even less. This action on proteins and stickener agent(s) is comparable to that of a conventional homogenizer when the pressure is of about 200 bars. When a conventional homogenizer is used, it is preferred to use a pressure from about 180 to 200 bars, and more preferably of 200 bars.

According to another embodiment of the present invention, the homogenized preparation is acidified in step 5) to a pH from about 4.2 to 4.5, such a pH range ensuring absence of sandiness and of microbiological contamination. Preferably, the pH is of about 4.3.

In yet another embodiment, acidification in step 5) is carried out using citric acid or fruit concentrate or fruits.

Depending on the use of the protein-enriched preparation, step 6) of the method of the invention may be carried out by performing pasteurization or by implementing an ultra heat treatment (UHT). Usually, pasteurization is much cheaper than UHT. Commonly, suppliers of fruit preparations are able to perform only pasteurization, but not a UHT process.

It is thus preferred that the heat treatment for long shelf life in step 6) be carried out by pasteurization. For instance, appropriate pasteurization may be carried out at a temperature from about 90 to 105°C, preferably of about 95°C, during a period from about 30 seconds to 10 minutes, preferably from about 5 to 8 minutes.

According to yet another embodiment of the invention, between steps 5) and 6), the preparation is heated at a temperature from about 60 to 90°C, preferably from about 70 to 80°C, and more preferably of about 75 °C.

According to yet another embodiment, the preparation obtained by the method of the invention is further cooled down to a temperature below about 45°C, preferably below about 20°C, more preferably of about 10°C. A fast cooling down is preferred in order to reduce the risks of microbiological contamination.

It is also possible to add various other components to the preparation, preferably between step 4) and step 5) or during step 5), said components being selected from stabilizers, flavors, colorants, defoamers sweeteners, nutrients (e.g., calcium), and fruits.

Another aspect of the present invention concerns a protein-enriched preparation containing soy proteins and milk-derived proteins which is obtainable by the above-described method.

Another aspect of the invention is related to the use of such protein-enriched preparations in acidic food products.

By "acidic food products" or "acidic products", it is meant herein all types of acidic products such as, without limitation, acidic drinks including dairy drinks (e.g., fermented milks), fruit juices, mixes of dairy drinks and fruit juices, and dairy products such as yoghurts, fresh cheeses, and the like.

Yet another aspect of the present invention is directed to a method for preparing a protein-enriched acidic food product containing soy proteins and milk-derived proteins, said method comprising mixing a protein-enriched preparation as described above with an acidic food product.

Advantageously, the protein-enriched preparation is mixed with the acidic food product at the end of the process for preparing the acidic food product, that is to say in the very late stages or in the last stage of the process.

A further aspect of the present invention relates to a protein-enriched acidic food product containing soy proteins and milk-derived proteins which is obtainable by the aforementioned method.

Preferably, this protein-enriched acidic food product has a total protein content from about 4 to 15% in weight, preferably from about 5 to 12% in weight, more preferably of about 6% in weight.

Also preferably, if the protein-enriched acidic food product is a drinkable product, its viscosity is from about 11 to 200mPa.s, more preferably from about 13 to 150 mPa.s, and even more preferably of about 15 mPa.s (when measured with a rheomate Mettler RM180: measurement system 1:1, shear speed 1290, time 10 s, temperature 10°C). Preferably, if the protein-enriched acidic food product is a "spoonable" product, its viscosity is from about 400 to 1000mPa.s, more preferably from about 500 to 800 mPa.s, and even more preferably of about 600 mPa.s (when measured with a rheomate Mettler RM180: measurement system 1:1, shear speed 64, time 10 s, temperature 10°C).

The protein-enriched preparations according to the present invention are stockable without alteration for a long time before use. In particular, these preparations may be stored for at least about 4 weeks, especially under storage conditions of about 10°C or less.

The invention as described above has other advantages, further to those of allowing production of preparations containing soy proteins and milk-derived proteins (i) having high total protein content, (ii) being free of any protein precipitation, (iii) being of low viscosity, and (iv) being organoleptically acceptable.

Soy is a major allergen. Consequently, a difficulty which generally arises in food industry while attempting to manufacture products containing soy proteins, is to differentiate the lines of production that use soy proteins from those that do not use soy proteins. The early use of preparations containing soy proteins in the manufacturing process would require a cumbersome cleaning of the lines of production, should the same lines been used for manufacturing products that do not contain soy proteins.

However, the method according to the invention makes it possible to: (i) use the same white mass at the beginning of the process regardless of the type of final food products to prepare, and (ii) avoid cumbersome cleaning of the lines of production, insofar as the preparation containing soy proteins is added at the end of the production process. More precisely about point (i) above which relates to the "delayed differentiation" generally pursued in food industry, final food products may contain different total protein contents, different types of proteins, and/or different other components such as fruits, calcium, and the like. However, these differences do not impede using the same white mass at the beginning of the product production. And, with the invention, soy allergen cross-contamination risks are limited to the end part of the manufacturing process.

Also, in addition to have a good and long stability, the protein-enriched preparations of the invention are free from any microbiological contamination.

Yet another advantage is that the method according to the present invention allows production of protein-enriched preparations having protein contents as high as at least about 16% in weight, even about 20% in weight, whereas such protein contents are usually not reachable using the methods disclosed so far (see, e.g., in EP 1 338210 mentioned above, the protein content in the final acidic liquids ranges preferably from 0.01 % to 8% by weight of liquid, more preferably from 1% to 3% by weight of liquid, whereas the protein content in the final acidic products obtained according to the present invention may be, for example, of up to about 15% in weight, preferably of about 10% in weight).

Also, as a consequence of the low viscosity of the protein-enriched preparations disclosed herein, is another advantage for food industry, which may be called "user-friendliness". Indeed, the preparations, while being concentrates, are injectable and pumpable: the addition thereof to any white mass is thus easy, cost-saving and does not require unconventional and/or expensive equipments. Also, these preparations are easily mixable to any white mass.

It is also worth noting that the protein-enriched preparations obtained according to the present invention may advantageously be pasteurized, thus rendering useless the pasteurization of the final acidic products containing such preparations. This has at least three advantages for food industry: (i) the protein-enriched preparations have an increased shelf life; (ii) these preparations have an enhanced "applicability", being generally useful for any final food product to obtain; and (iii) processes for manufacturing final acidic products are simplified.

The following examples are given to illustrate the present invention.

### Example 1: Example of an embodiment of the method for manufacturing protein-enriched preparations containing soy proteins and milk-derived proteins

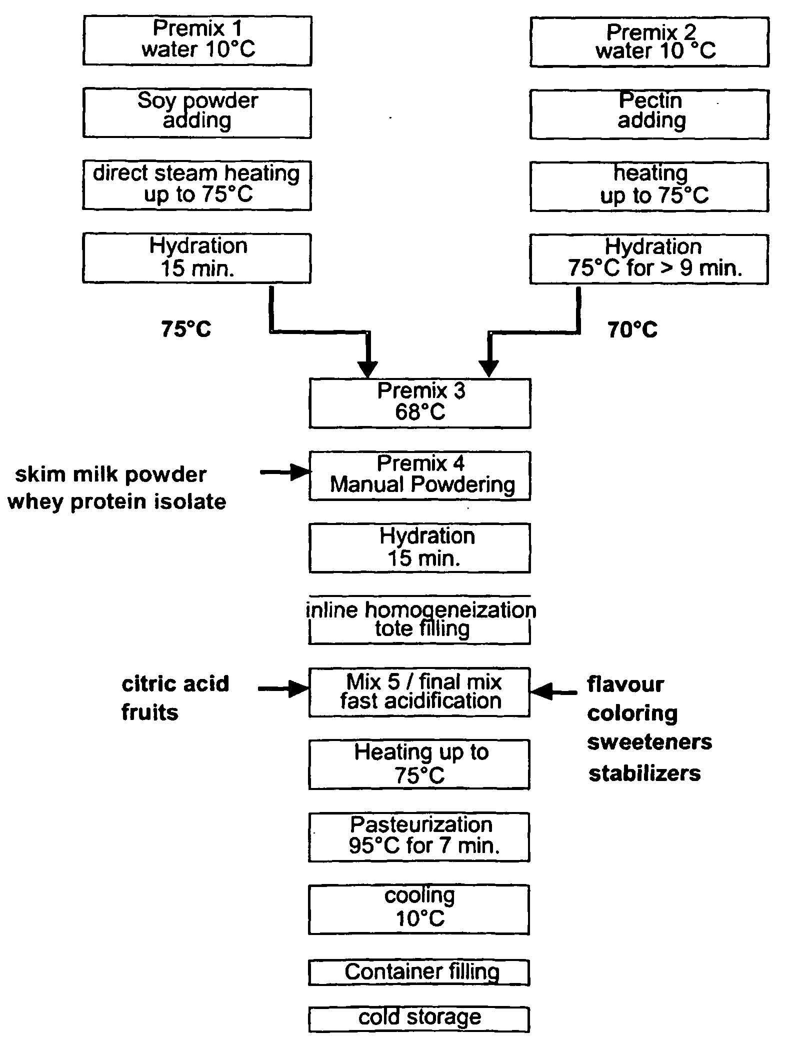

### Example 2: Examples of compositions

### 2-1- Table 1: Example of composition of a protein-enriched preparation

**Table 1**

| **Ingredients** | **Suppliers** | **%** |
|---|---|---|
| Decalcified water | | 66,55 |
| Soy protein isolate | | 9 |
| Skim Milk powder EPI (34%) | EPI | 5,5 |
| Whey protein isolate NZMP 8899 | NZMP | 6 |
| Pectin AMD 783 | Danisco | 1 |
| Kiwipuree concentrate (3,1 X) | | 10 |
| Flavour | | 1 |
| Sweeteners (acesulfame K, Aspartame) | | 0,05 |
| Chlorophyll | | 0,1 |
| Citric acid | | 0,8 |
| **TOTAL** | | **100** |

### 2-2- Table 2: Example of compositions of "premixes" used for preparing a protein-enriched preparation

**Table 2**

| **Ingredients** | **Premix 1** | **Premix 2** | **Premix 3** | **Premix 4** | **Mix 5** |
|---|---|---|---|---|---|
| Decalcified water | 81,6 | 96,3 | | | 3 |
| Soy protein isolate | 18,4 | | | | |
| Skim Milk powder EPI (34%) | | | | 6,2 | |
| Whey protein isolate NZMP 8899 | | | | 6,8 | |
| Pectin AMD 783 | | 3,7 | | | |
| Kiwipuree | | | | | 10 |
| Flavour | | | | | 0,1 |
| Sweeteners (acesulfame K, Aspartame) | | | | | 0,07 |
| Chlorophyll | | | | | 0,1 |
| Citric acid Anhydrat | | | | | 0,8 |
| NaOH 1 % solution | | | | | 0,003 |
| Citric acid solution 40% | | | | | 0,06 |
| Premix 1 | | | 64 | | |
| Premix 2 | | | 36 | | |
| Premix 3 | | | | 87 | |
| Premix 4 | | | | | 85,867 |
| **TOTAL** | **100** | **100** | **100** | **100** | **100** |

### 2-3- Tables 3 and 4: Example of compositions of alternative "premixes" used for preparing a protein-enriched preparation

**Table 3**

| **Ingredients** | **Premix 1** | **Premix 2** | **Premix 3** |
|---|---|---|---|
| Decalcified water | 82 | 97 | |
| Soy protein isolate | 18 | | |
| Pectin YM 115 (Supplier: Sansho) | | 3 | |
| Premix 1 | | | 64 |
| Premix 2 | | | 36 |
| **TOTAL** | **100** | **100** | **100** |

**Table 4**

| | **Premix 4** | | |
|---|---|---|---|
| **Ingredients** | **4.1** | **4.2** | **4.3** |
| Decalcified water | | | 3,6 |
| Soy protein isolate | | | |
| Pectin AMD 783 (Supplier: Sansho) | | | |
| Skim Milk powder EPI (34%) | 6 | | |
| Whey protein isolate NZMP 8899 | 6,7 | 6,9 | 6,7 |
| Milk protein concentrate ALAPLEX 4850 | | 2,6 | |
| Milk protein concentrate PROMILK 852 | | | 2,4 |
| Kiwipuree (3,1 X) | | | |
| Citric acid | | | |
| Chlorophyll | | | |
| Premix 4 | | | |
| Premix 3 | 87,3 | 90,5 | 87,3 |
| Premix 2 | | | |
| Premix 1 | | | |
| **TOTAL** | **100** | **100** | **100** |

## Claims

1. Method for the manufacturing of a protein-enriched preparation containing soy proteins and milk-derived proteins, comprising the following steps:
1) hydration of soy proteins and of at least one thickener agent is carried out in two different recipients:
a) an aqueous composition containing soy proteins is heated at a temperature from about 50 to 90°C during a period from about 2 to 60 minutes,
b) an aqueous composition containing at least one thickener agent is heated at a temperature from about 55 to 90°C during a period from about 2 to 60 minutes,
2) the aqueous compositions obtained in steps 1a) and 1b) are mixed,
3) milk-derived proteins are added to the mix obtained in step 2,
4) the preparation obtained in step 3 is homogenized,
5) the homogenized preparation is acidified to a pH from about 3 to 5.5,
6) optionally, the preparation obtained in step 5) is heat-treated for long shelf life, and
7) optionally, a fast cooling step down is performed.

2. Method according to claim 1, wherein said protein-enriched preparation has a total protein content from about 10 to 20% in weight, preferably from about 15 to 18% in weight, and more preferably of about 16% in weight.

3. Method according to claim lor 2, wherein the soy protein content in said protein-enriched preparation is from about 6 to 16%, preferably from about 7 to 10%, more preferably of about 8%, all % being expressed in weight of the preparation.

4. Method according to claim 1, wherein the weight ratio of soy proteins to thickener agent(s) is from about 9:1 to 15:1, preferably from about 10:1 to 13:1, and yet preferably of about 10:1.

5. Method according to claim 1 or 4, wherein the thickener agent is selected from the group consisting of algae extract, alginic acid, alginate, agar-agar, carraghenan, carob bean meal, tamarin bean, guar meal, gum such as xanthan gum and carob gum, and pectin.

6. Method according to claim 5, wherein the thickener agent is pectin or xanthan gum or carob gum or a combination thereof.

7. Method according to claim 1, wherein the heating in steps 1a) and 1b) is carried out at a temperature from about 60 to 80°C, said temperature being preferably of about 75°C.

8. Method according to claim 1 or 7, wherein the heating in step 1a) is carried out during a period from about 5 to 50 minutes, said period being preferably from about 10 to 30 minutes and being more preferably of about 15 minutes; and the heating in step 1b) is carried out during a period from about 3 to 40 minutes, preferably from about 5 to 20 minutes and more preferably from about 9 to 15 minutes.

9. Method according to claim 1, wherein the mix in step 2) is maintained at a temperature from about 50 to 80°C, said temperature being preferably from about 60 to 70°C, and being more preferably of about 68°C.

10. Method according to claim 1, wherein said milk-derived proteins added in step 3) are selected from skimmed milk proteins, milk protein concentrates, whey proteins, and combinations thereof.

11. Method according to claim 1 or 10, wherein said milk-derived proteins are added in step 3) in the form of powder.

12. Method according to claim 1, wherein, before homogenization in step 4), the preparation is powdered and hydrated during a period from about 2 to 60 minutes, preferably from about 5 to 50 minutes, more preferably of about 15 minutes.

13. Method according to claim 12, wherein said hydration is carried out at a temperature from about 50 to 80°C, preferably from about 60 to 70°C, and more preferably from 60 to 65°C.

14. Method according to claim 1, wherein homogenization in step 4) is performed using an in line homogenizer or a conventional homogenizer.

15. Method according to claim 14, wherein, when a conventional homogenizer is used, homogenization is carried out under a pressure from about 180 to 200 bars.

16. Method according to claim 1, wherein said homogenized preparation is acidified in step 5) to a pH from about 4.2 to 4.5, preferably to a pH of about 4.3.

17. Method according to claim 1 or 16, wherein acidification in step 5) is carried out using citric acid or fruit concentrate or fruits.

18. Method according to claim 1, wherein the heat treatment for long shelf life in step 6) is carried out by pasteurization.

19. Method according to claim 18, wherein said pasteurization is carried out at a temperature from about 90 to 105°C, preferably of about 95°C, during a period from about 30 seconds to 10 minutes, preferably from about 5 to 8 minutes.

20. Method according to anyone of claims 1 to 19, wherein between steps 5) and 6), the preparation is heated at a temperature from about 60 to 90°C, preferably from about 70 to 80°C, and more preferably of about 75 °C.

21. Method according to anyone of claims 1 to 20, wherein the resulting preparation is further cooled down to a temperature below about 45°C, preferably below about 20°C, more preferably of about 10°C.

22. Method according to anyone of claims 1 to 21, wherein various other components are added to the preparation, preferably between step 4) and step 5) or in step 5), said components being selected from stabilizers, flavors, colorants, defoamers, sweeteners, nutrients, and fruits.

23. Protein-enriched preparation containing soy proteins and milk-derived proteins obtainable by a method according to anyone of claims 1 to 22.

24. Protein-enriched preparation according to claim 23, having a total protein content from about 10 to 20% in weight, preferably from about 15 to 18% in weight, and more preferably of about 16% in weight.

25. Protein-enriched preparation according to claim 23 or 24, having a soy protein content from about 6 to 16%, preferably from about 7 to 10%, more preferably of about 8%, all % being expressed in weight of the preparation.

26. Use of a protein-enriched preparation according to anyone of claims 23 to 25 in acidic food products.

27. Method for preparing a protein-enriched acidic food product containing soy proteins and milk-derived proteins, comprising mixing a protein-enriched preparation according to anyone of claims 23 to 25 with an acidic food product.

28. Method according to claim 27, wherein the mixing step is carried out at the end of the preparation of the acidic food product.

29. Protein-enriched acidic food product containing soy proteins and milk-derived proteins obtainable by a method according to claim 27 or 28.

30. Protein-enriched acidic food product according to claim 29, having a total protein content from about 4 to 15% in weight, preferably from about 5 to 12% in weight, more preferably of about 6% in weight.

## Patentansprüche

1. Verfahren zur Herstellung eines proteinangereicherten Präparats, das Sojaproteine und aus Milch gewonnene Proteine enthält, umfassend die folgenden Schritte:
1) eine Hydratation von Sojaproteinen und wenigstens einem Verdickungsmittel wird in zwei verschiedenen Behältern durchgeführt:
a) ein wässrige Zusammensetzung, die Sojaproteine enthält, wird bei einer Temperatur von etwa 50 bis 90 °C während eines Zeitraums von etwa 2 bis 60 Minuten erwärmt,
b) eine wässrige Zusammensetzung, die wenigstens ein Verdickungsmittel enthält, wird bei einer Temperatur von etwa 55 bis 90 °C während eines Zeitraums von etwa 2 bis 60 Minuten erwärmt,
2) die in Schritt 1a) und 1b) erhaltenen wässrigen Zusammensetzungen werden gemischt,
3) aus Milch gewonnene Proteine werden der in Schritt 2 erhaltenen Mischung beigegeben,
4) das in Schritt 3 erhaltene Präparat wird homogenisiert,
5) das homogenisierte Präparat wird auf einen pH von etwa 3 bis 5,5 angesäuert,
6) optional wird das in Schritt 5) erhaltene Präparat für eine lange Haltbarkeit wärmebehandelt, und
7) optional wird ein Schnellabkühlschritt ausgeführt.

2. Verfahren nach Anspruch 1, wobei das proteinangereicherte Präparat einen Gesamtproteingehalt von etwa 10 bis 20 Gew.-%, vorzugsweise von etwa 15 bis 18 Gew.-% und insbesondere von etwa 16 Gew.-% aufweist.

3. Verfahren nach Anspruch 1 oder 2, wobei der Sojaproteingehalt im proteinangereicherten Präparat etwa 6 bis 16 %, vorzugsweise etwa 7 bis 10 % und insbesondere etwa 8 % beträgt, wobei alle % bezogen auf das Gewicht des Präparats angegeben sind.

4. Verfahren nach Anspruch 1, wobei das Gewichtsverhältnis von Sojaproteinen zu Verdickungsmittel(n) etwa 9:1 bis 15:1, vorzugsweise etwa 10:1 bis 13:1 und insbesondere etwa 10:1 beträgt.

5. Verfahren nach Anspruch 1 oder 4, wobei das Verdickungsmittel ausgewählt wird aus der Gruppe bestehend aus Algenextrakt, Alginsäure, Alginat, Agar-Agar, Carraghen, Johannisbrotmehl, Tamarindenmehl, Guar-Keimlingsmehl, Gummi, wie beispielsweise Xanthangummi und Johannisbrotgummi, und Pektin.

6. Verfahren nach Anspruch 5, wobei das Verdickungsmittel Pektin oder Xanthangummi oder Johannisbrotgummi oder eine Kombination davon ist.

7. Verfahren nach Anspruch 1, wobei die Erwärmung in Schritt 1a) und 1b) bei einer Temperatur von etwa 60 bis 80 °C durchgeführt wird, wobei die Temperatur vorzugsweise etwa 75 °C beträgt.

8. Verfahren nach Anspruch 1 oder 7, wobei die Erwärmung in Schritt 1a) während eines Zeitraums von etwa 5 bis 10 Minuten durchgeführt wird, wobei der Zeitraum vorzugsweise etwa 10 bis 30 Minuten und insbesondere etwa 15 Minuten beträgt; und die Erwärmung in Schritt 1b) während eines Zeitraums von etwa 3 bis 40 Minuten, vorzugsweise von etwa 5 bis 20 Minuten und insbesondere von etwa 9 bis 15 Minuten durchgeführt wird.

9. Verfahren nach Anspruch 1, wobei die Mischung in Schritt 2) auf einer Temperatur von etwa 50 bis 80 °C gehalten wird, wobei die Temperatur vorzugsweise etwa 60 bis 70 °C und insbesondere etwa 68 °C beträgt.

10. Verfahren nach Anspruch 1, wobei die aus Milch gewonnenen Proteine, die in Schritt 3) beigegeben werden, aus Magermilchproteinen, Milchproteinkonzentraten, Molkenproteinen und Kombinationen davon ausgewählt werden.

11. Verfahren nach Anspruch 1 oder 10, wobei die aus Milch gewonnenen Proteine, die in Schritt 3) beigegeben werden, in Form von Pulver sind.

12. Verfahren nach Anspruch 1, wobei vor der Homogenisierung in Schritt 4) das Präparat während eines Zeitraums von etwa 2 bis 60 Minuten, vorzugsweise von etwa 5 bis 50 Minuten und insbesondere von etwa 15 Minuten fein zermahlen und hydratisiert wird.

13. Verfahren nach Anspruch 12, wobei die Hydratation bei einer Temperatur von etwa 50 bis 80 °C, vorzugsweise von etwa 60 bis 70 °C und insbesondere von 60 bis 65 °C durchgeführt wird.

14. Verfahren nach Anspruch 1, wobei die Homogenisierung in Schritt 4) unter Verwendung eines In-line-Homogenisators oder eines herkömmlichen Homogenisators durchgeführt wird.

15. Verfahren nach Anspruch 14, wobei, wenn ein herkömmlicher Homogenisator verwendet wird, die Homogenisierung unter einem Druck von etwa 180 bis 200 Bar durchgeführt wird.

16. Verfahren nach Anspruch 1, wobei das homogenisierte Präparat in Schritt 5) auf einen pH von etwa 4,2 bis 4,5 und vorzugsweise auf einen pH von etwa 4,3 angesäuert wird.

17. Verfahren nach Anspruch 1 oder 16, wobei die Ansäuerung in Schritt 5) unter Verwendung von Citronensäure oder Fruchtkonzentrat oder Früchten durchgeführt wird.

18. Verfahren nach Anspruch 1, wobei die Wärmebehandlung für lange Haltbarkeit in Schritt 6) durch Pasteurisation durchgeführt wird.

19. Verfahren nach Anspruch 18, wobei die Pasteurisation bei einer Temperatur von etwa 90 bis 105 °C und vorzugsweise von etwa 95 °C während eines Zeitraums von etwa 30 Sekunden bis 10 Minuten und vorzugsweise von etwa 5 bis 8 Minuten durchgeführt wird.

20. Verfahren nach einem der Ansprüche 1 bis 19, wobei zwischen Schritt 5) und 6) das Präparat bei einer Temperatur von etwa 60 bis 90 °C, vorzugsweise von etwa 70 bis 80 °C und insbesondere von etwa 75 °C erwärmt wird.

21. Verfahren nach einem der Ansprüche 1 bis 20, wobei das resultierende Präparat ferner auf eine Temperatur von unter etwa 45 °C, vorzugsweise von unter etwa 20 °C und insbesondere von etwa 10 °C abgekühlt wird.

22. Verfahren nach einem der Ansprüche 1 bis 21, wobei dem Präparat vorzugsweise zwischen Schritt 4) und Schritt 5) oder in Schritt 5) verschiedene andere Zutaten beigegeben werden, wobei die Zutaten aus Stabilisatoren, Aromastoffen, Farbstoffen, Entschäumern, Süßmitteln, Nährstoffen und Früchten ausgewählt werden.

23. Proteinangereichertes Präparat, das Sojaproteine und aus Milch gewonnene Proteine enthält und durch ein Verfahren nach einem der Ansprüche 1 bis 22 erhältlich ist.

24. Proteinangereichertes Präparat nach Anspruch 23, das einen Gesamtproteingehalt von etwa 10 bis 20 Gew.-%, vorzugsweise von etwa 15 bis 18 Gew.-% und insbesondere von etwa 16 Gew.-% aufweist.

25. Proteinangereichertes Präparat nach Anspruch 23 oder 24, das einen Sojaproteingehalt von etwa 6 bis 16 %, vorzugsweise von etwa 7 bis 10 % und insbesondere von etwa 8 % aufweist, wobei alle % bezogen auf das Gewicht des Präparats angegeben sind.

26. Verwendung eines proteinangereicherten Präparats nach einem der Ansprüche 23 bis 25 in säurehaltigen Lebensmittelprodukten.

27. Verfahren zur Herstellung eines proteinangereicherten säurehaltigen Lebensmittelprodukts, das Sojaproteine und aus Milch gewonnene Proteine enthält, umfassend ein Mischen eines proteinangereicherten Präparats nach einem der Ansprüche 23 bis 25 mit einem säurehaltigen Lebensmittelprodukt.

28. Verfahren nach Anspruch 27, wobei der Mischschritt am Ende der Herstellung des säurehaltigen Lebensmittelprodukts ausgeführt wird.

29. Proteinangereichertes säurehaltiges Lebensmittelprodukt, das Sojaproteine und aus Milch gewonnene Proteine enthält und durch ein Verfahren nach Anspruch 27 oder 28 erhältlich ist.

30. Proteinangereichertes säurehaltiges Lebensmittelprodukt nach Anspruch 29, das einen Gesamtproteingehalt von etwa 4 bis 15 Gew.-%, vorzugsweise von etwa 5 bis 12 Gew.-% und insbesondere von etwa 6 Gew.-% aufweist.

## Revendications

1. Procédé pour la fabrication d'une préparation enrichie en protéines, contenant des protéines de soja et des protéines dérivées du lait, comprenant les étapes suivantes :
1) l'hydratation de protéines de soja et d'au moins un agent épaississant est réalisée dans deux récipients différents :
a) une composition aqueuse contenant des protéines de soja est chauffée à une température d'environ 50 à 90°C durant une période d'environ 2 à 60 minutes,
b) une composition aqueuse contenant au moins un agent épaississant est chauffée à une température d'environ 55 à 90°C durant une période d'environ 2 à 60 minutes,
2) les compositions aqueuses obtenues dans les étapes 1a) et 1b) sont mélangées,
3) les protéines dérivées du lait sont ajoutées au mélange obtenu dans l'étape 2,
4) la préparation obtenue dans l'étape 3) est homogénéisée,
5) la préparation homogénéisée est acidifiée à un pH d'environ 3 à 5,5,
6) éventuellement, la préparation obtenue dans l'étape 5) est traitée à la chaleur pour une longue durée de conservation, et
7) éventuellement, une étape de refroidissement rapide est effectuée.

2. Procédé selon la revendication 1, dans lequel ladite préparation enrichie en protéines a une teneur en protéines totale d'environ 10 à 20 % en poids, de préférence d'environ 15 à 18 % en poids, et mieux encore d'environ 16 % en poids.

3. Procédé selon la revendication 1 ou 2, dans lequel la teneur en protéines de soja de ladite préparation enrichie en protéines est d'environ 6 à 16 %, de préférence d'environ 7 à 10 %, mieux encore d'environ 8 %, tous les pourcentages étant exprimés en poids de 1a préparation.

4. Procédé selon la revendication 1, dans lequel le rapport en poids des protéines de soja à 1' (aux) agent(s) épaississant(s) est d'environ 9/1 à 15/1, de préférence d'environ 10/1 à 13/1, et mieux encore d'environ 10/1.

5. Procédé selon la revendication 1 ou 4, dans lequel l'agent épaississant est choisi dans le groupe constitué par un extrait d'algues, l'acide alginique, l'alginate, l'agar-agar, la carraghénane, la farine de caroube, le tamarin, la farine de guar, une gomme telle que la gomme xanthane et la gomme de caroube, et la pectine.

6. Procédé selon la revendication 5, dans lequel l'agent épaississant est la pectine ou la gomme xanthane ou la gomme de caroube ou une de leurs combinaisons.

7. Procédé selon la revendication 1, dans lequel le chauffage dans les étapes 1a) et 1b) est mis en oeuvre à une température d'environ 60 à 80°C, ladite température étant de préférence d'environ 75°C.

8. Procédé selon la revendication 1 ou 7, dans lequel le chauffage dans l'étape 1a) est mis en oeuvre durant une période d'environ 5 à 50 minutes, ladite période étant de préférence d'environ 10 à 30 minutes et étant mieux encore d'environ 15 minutes ; et le chauffage dans l'étape 1b) est mis en oeuvre durant une période d'environ 3 à 40 minutes, de préférence d'environ 5 à 20 minutes et mieux encore d'environ 9 à 15 minutes.

9. Procédé selon la revendication 1, dans lequel le mélange dans l'étape 2) est maintenu à une température d'environ 50 à 80°C, ladite température étant de préférence d'environ 60 à 70°C, et étant mieux encore d'environ 68°C.

10. Procédé selon la revendication 1, dans lequel lesdites protéines dérivées du lait, ajoutées dans l'étape 3), sont choisies parmi les protéines de lait écrémé, les concentrés de protéines de lait, les protéines de lactosérum, et leurs combinaisons.

11. Procédé selon la revendication 1 ou 10, dans lequel lesdites protéines dérivées du lait sont ajoutées dans l'étape 3) sous la forme d'une poudre.

12. Procédé selon la revendication 1, dans lequel, avant l'homogénéisation dans l'étape 4), la préparation est mise en poudre et hydratée durant une période d'environ 2 à 60 minutes, de préférence d'environ 5 à 50 minutes, mieux encore d'environ 15 minutes.

13. Procédé selon la revendication 12, dans lequel ladite hydratation est mise en oeuvre à une température d'environ 50 à 80°C, de préférence d'environ 60 à 70°C, et mieux encore de 60 à 65°C.

14. Procédé selon la revendication 1, dans lequel l'homogénéisation dans l'étape 4) est mise en oeuvre au moyen d'un homogénéisateur en ligne - ou d'un homogénéisateur conventionnel.

15. Procédé selon la revendication 14, dans lequel, quand un homogénéisateur conventionnel est utilisé, l'homogénéisation est mise en oeuvre sous une pression d'environ 180 à 200 bars.

16. Procédé selon la revendication 1, dans lequel ladite préparation homogénéisée est acidifiée dans l'étape 5) à un pH d'environ 4,2 à 4,5, de préférence à un pH d'environ 4,3.

17. Procédé selon la revendication 1 ou 16, dans lequel l'acidification dans l'étape 5) est mise en oeuvre au moyen d'acide citrique ou de concentré de fruits, ou de fruits.

18. Procédé selon la revendication 1, dans lequel le traitement à la chaleur pour une longue durée de conservation dans l'étape 6) est mis en oeuvre par pasteurisation.

19. Procédé selon la revendication 18, dans lequel ladite pasteurisation est mise en oeuvre à une température d'environ 90 à 105°C, de préférence d'environ 95°C, durant une période d'environ 30 secondes à 10 minutes, de préférence d'environ 5 à 8 minutes.

20. Procédé selon l'une quelconque des revendications 1 à 19, dans lequel, entre les étapes 5) et 6), la préparation est chauffée à une température d'environ 60 à 90°C, de préférence d'environ 70 à 80°C, et mieux encore d'environ 75°C.

21. Procédé selon l'une quelconque des revendications 1 à 20, dans lequel la préparation résultante est en outre refroidie à une température inférieure à environ 45°C, de préférence inférieure à environ 20°C, mieux encore d'environ 10°C.

22. Procédé selon l'une quelconque des revendications 1 à 21, dans lequel divers autres composants sont ajoutés à la préparation, de préférence entre l'étape 4) et l'étape 5) ou dans l'étape 5), lesdits composants étant choisis parmi les stabilisants, les arômes, les colorants, les anti-moussants, les édulcorants, les nutriments, et les fruits.

23. Préparation enrichie en protéines contenant des protéines de soja et des protéines dérivées du lait, susceptible d'être obtenue par un procédé selon l'une quelconque des revendications 1 à 22.

24. Préparation enrichie en protéines selon la revendication 23, ayant une teneur en protéines totale d'environ 10 à 20 % en poids, de préférence d'environ 15 à 18 % en poids, et mieux encore d'environ 16 % en poids.

25. Préparation enrichie en protéines selon la revendication 23 ou 24, ayant une teneur en protéines de soja d'environ 6 à 16 %, de préférence d'environ 7 à 10 %, mieux encore d'environ 8 %, tous les pourcentages étant exprimés en poids de la préparation.

26. Utilisation d'une préparation enrichie en protéines selon l'une quelconque des revendications 23 à 25, dans des produits alimentaires acides.

27. Procédé pour préparer un produit alimentaire acide enrichi en protéines contenant des protéines de soja et des protéines dérivées du lait, comprenant le mélange d'une préparation enrichie en protéines selon l'une quelconque des revendications 23 à 25 avec un produit alimentaire acide.

28. Procédé selon la revendication 27, dans lequel l'étape de mélange est mise en oeuvre à la fin de la préparation du produit alimentaire acide.

29. Produit alimentaire acide enrichi en protéines contenant des protéines de soja et des protéines dérivées du lait, susceptible d'être obtenu par un procédé selon la revendication 27 ou 28.

30. Produit alimentaire acide enrichi en protéines selon la revendication 29, ayant une teneur en protéines totale d'environ 4 à 15 % en poids, de préférence d'environ 5 à 12 % en poids, mieux encore d'environ 6 % en poids.
